**Europäisches Patentamt**

**European Patent Office**

**Office européen des brevets**

(11) Veröffentlichungsnummer: **0 492 273 A2**

## (12) EUROPÄISCHE PATENTANMELDUNG

(21) Anmeldenummer: **91121207.4**

(22) Anmeldetag: **11.12.91**

(51) Int. Cl.5: **A01F 29/06**, A01F 29/12

(30) Priorität: **20.12.90 DE 4040888**

(43) Veröffentlichungstag der Anmeldung:
**01.07.92 Patentblatt 92/27**

(84) Benannte Vertragsstaaten:
**AT BE DE DK FR GB IT NL**

(71) Anmelder: **CLAAS OHG**
**Münsterstrasse 33**
**W-4834 Harsewinkel 1(DE)**

(72) Erfinder: **Klinger, Ernst, Dipl.-Ing.**
**Ravensburger Weg 7**
**W-4834 Harsewinkel(DE)**
Erfinder: **Isfort, Heinrich, Dipl.-Ing.**
**Rödder 22**
**W-4408 Dülmen(DE)**

(74) Vertreter: **Patentanwälte Dipl.-Ing. E. Eisele**
**Dr.-Ing. H. Otten**
**Seestrasse 42**
**W-7980 Ravensburg(DE)**

(54) Häcksler zum Zerkleinern von halmförmigem Erntegut.

(57) Es wird ein Häcksler zum Zerkleinern von halmförmigem Erntegut beschrieben mit einer Messertrommel (8) und einem steil ansteigenden Auswurfschacht (15, 12), wobei sich die Messer (7) von unten nach oben an einer horizontalen Gegenschneide (5) vorbei bewegen. Hierbei wird die Wurfweite und die Auffächerung des Schneidgutstrahles dadurch verbessert, daß ein umlaufender Nachbeschleuniger (9) vorgesehen ist. Der Schachtabschnitt (15) zwischen der Messertrommel (8) und dem Nachbeschleuniger (9) ist abnehmbar und kann durch ein Nachverkleinerergehäuse, das z. B. zwei Quetschwalzen enthält, ersetzt werden.

FIG.2

EP 0 492 273 A2

Die Erfindung betrifft einen Häcksler zum Zerkleinern von halmförmigem Erntegut mit einer horizontalachsigen Messertrommel, die mit einer feststehenden Gegenschneide zusammenwirkt, und mit einem steil ansteigenden Auswurfschacht, wobei sich die Messer von unten nach oben an der Gegenschneide vorbei bewegen und das Schneidgut direkt nach oben werfen.

Ein als Anhänge- oder Feldhäcksler ausgebildeter Häcksler dieser Art ist aus der deutschen Patentschrift 24 46 916 bekannt. Die gewählte Anordnung der Gegenschneide bzw. die getroffene Wahl der Drehrichtung der Messertrommel hat den Vorteil, daß Reibungsverluste des Häckselgutes an der Gehäusewand der Messertrommel weitgehend vermieden werden, was gegenüber Häckslern mit entgegengesetzter Messertrommel-Drehrichtung zu Energieeinsparungen führt. Indes reicht die Wurfweite troztdem nicht aus, um großvolumige, d. h. hohe und lange Transportwagen zu beladen.

Der Erfindung liegt die Aufgabe zugrunde, eine größere Wurfweite und eine Auffächerung des Schneidgutstrahles zu erreichen, d. h. einen über den ganzen Querschnitt des Auswurfschachts gleichmäßig verteilten Gutstrom.

Diese Aufgabe wird erfindungsgemäß dadurch gelöst, daß am Auswurfschacht ein umlaufender Nachbeschleuniger angeordnet ist.

Außerdem wird vorgeschlagen, daß eine Nachzerkleinerungsvorrichtung, insbesondere in Gestalt von zwei parallelachsigen Quetschwalzen (21), welche die Maiskörner zerkleinern, dazu vorgesehen ist, wahlweise zwischen die Messertrommel und den Nachbeschleuniger eingefügt zu werden. Dabei ist es von besonderem Vorteil, wenn die Messertrommel, die Nachzerkleinerungsvorrichtung und der Nachbeschleuniger mit kleinstmöglichem gegenseitigen Abstand angeordnet sind.

Solche kleine Abstände erschweren das Austauschen. Es ist deshalb in Weiterbildung der Erfindung vorgesehen, daß ein Nachzerkleinerergehäuse vorgesehen ist, welches zusammen mit darin enthaltenen Quetschwalzen gegen den Abschnitt des Auswurfschachts austauschbar ist, der sich zwischen dem Nachbeschleuniger und der Messertrommel befindet. Ferner kann das Austauschen dadurch erleichtert werden, daß das Nachzerkleinerergehäuse und der Schachtabschnitt jeweils einen Teil des Mantels des Messertrommelgehäuses und des Nachbeschleunigergehäuses einschließen und daß die Austauschteile durch Flansche mit den bleibenden Gehäuseteilen verbindbar sind.

Insgesamt wird mit der Erfindung erreicht, daß der Häcksler für jegliches langfaseriges Erntegut verwendbar ist und daß mit einem hohen und langen Auswurfsystem auch großvolumige Transportwagen ohne Schwierigkeiten gefüllt werden können.

Die Erfindung soll nachstehend an einem Ausführungsbeispiel näher erläutert werden. In der zugehörigen Zeichnung zeigt

Fig. 1 eine schematische Seitenansicht eines Feldhäckslers im Schnitt,

Fig. 2 in ähnlicher Darstellung die Messertrommel nach Fig. 1 sowie das anschließende Förderkanalsystem mit Nachbeschleuniger in größerem Maßstab und

Fig. 3 eine Variante zu Fig. 2 mit Kornbrecher-Walzen.

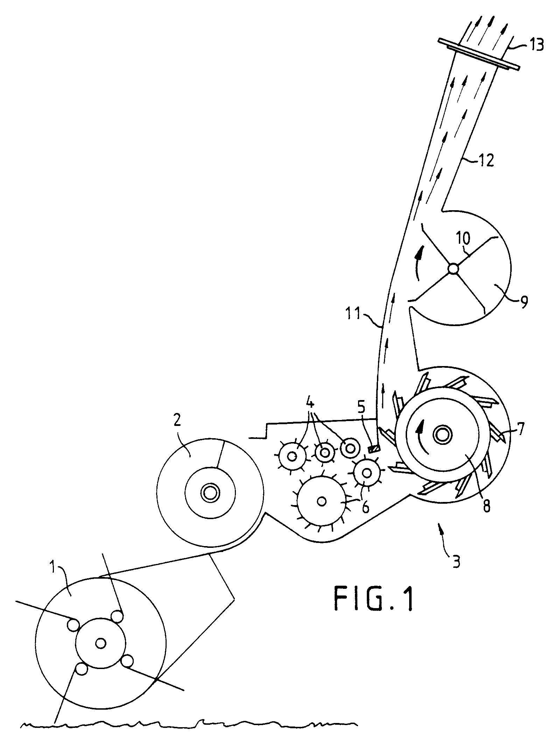

Der Häcksler nach Fig. 1 besitzt einen Aufnehmer 1 und eine Querförderschnecke 2, die das aufgenommene Erntegut zu einem Häckselaggregat 3 fördert. Nach der Querförderschnecke 2 wird das Erntegut durch Förderwalzen eingezogen und verdichtet, von denen einige profiliert sind. Die oberen, festgelagerten Walzen 4 tangieren eine Förderebene, in der sich auch die Gegenschneide S befindet, während die unteren Walzen 6 gefedert sind.

Die Messer 7 einer mit hoher Drehzahl rechtslaufend (nach Fig. 1) angetriebenen Messertrommel 8 werfen das Häckselgut nach dem Schneidprozeß unmittelbar nach oben zu einem Nachbeschleuniger 9, der eine vierflügelige ebenfalls rechtsdrehende Flügelwalze 10 hat. Das von der Trommel abgeworfene Häckselgut gleitet auf dem vorzugsweise leicht gekrümmten Sammelleitblech 11 in einem dünnen kompakten Strahl zum Nachbeschleuniger 9. Dieser wirft das Häckselgut aufgefächert durch einen sogenannten Turm 12 und einen nur angedeuteten Auswurfkrümmer 13 auf einen Transportwagen. Auch bei seitlich ausgeschwenktem Auswurfkrümmr 13 ergibt sich ein über den gesamten Querschnitt gleichmäßiger Häckselgutstrahl.

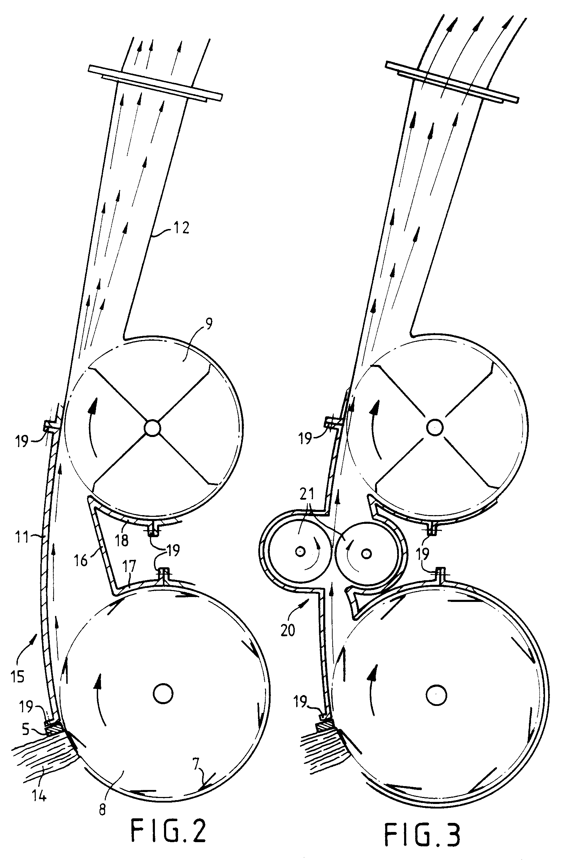

In Fig. 2 ist die Messertrommel 8 mit ihrer Gegenschneide5 und der Nachbeschleuniger noch einmal in größeremMaßstab dargestellt. Das zugeführte Häckselgut 14 ist ingepreßter Form angedeutet. Die detaillierteSchnittdarstellung läßt erkennen, daß der untereSchachtabschnitt 15 des Auswurfschachts zwischen derMessertrommel 8 und dem Nachbeschleuniger 9 als abnehmbares Gehäuseteil ausgebildet ist. Dieser Schachtabschnitt 15 umfaßt einerseits das Sammelleitblech 11 und auf der gegenüberliegenden Seite eine ebene Zwischenwand 16 sowie zwei zylindrische Wandteile 17 und 18 und die nicht eigens bezeichneten zu den Drehachsen senkrechten Wandteile. Mit flanschartigen sogenannten Schraubleisten 19 ist der herausnehmbare Schachtabschnitt 15 mit dem übrigen Gehäuse verbunden.

Gemäß Fig. 3 kann für den Maiserntebetrieb anstelle des Schachtabschnitts 15 ein Nachzerkleinerergehäuse 20 angesetzt werden. Es hat die gleichen passenden Schraubleisten 19 und enthält zwei zusammenwirkende Kornbrecherwalzen 21, deren Achsen parallel zur Messerwalzenachse verlaufen. Der Antrieb dieser Kornbrecherwalzen 21 ist so ausgestaltet, daß er beim Wegnehmen des Walzengehäuses abgetrennt werden kann und beim Grashäckseln ausgeschaltet bleibt.

| 1 | Aufnehmer |
| 2 | Querförderschnecke |
| 3 | Häckselaggregat |
| 4 | feste Walzen |
| 5 | Gegenschneide |
| 6 | gefederte Walzen |
| 7 | Messer |
| 8 | Messertrommel |
| 9 | Nachbeschleuniger |
| 10 | Flügelwalze |
| 11 | Sammelleitblech |
| 12 | Turm |
| 13 | Auswurfkrümmer |
| 14 | Häckselgut |
| 15 | Schachtabschnitt |
| 16 | Zwischenwand |
| 17 | Wandteil |
| 18 | Wandteil |
| 19 | Schraubleiste |
| 20 | Nachzerkleinerergehäuse |
| 21 | Kornbrecherwalzen |

**Patentansprüche**

1. Häcksler zum Zerkleinern von halmförmigem Erntegut mit einer horizontalachsigen Messertrommel, die mit einer feststehenden Gegenschneide zusammenwirkt, und mit einem steil ansteigenden Auswurfschacht, wobei sich die Messer von unten nach oben an der Gegenschneide vorbei bewegen und das Schneidgut direkt nach oben werfen, dadurch gekennzeichnet, daß am Auswurfschacht ein vorzugsweise in gleicher Drehrichtung wie die Messertrommel umlaufender Nachbeschleuniger (9) angeordnet ist.

2. Häcksler nach Anspruch 1, dadurch gekennzeichnet, daß eine Nachzerkleinerungsvorrichtung (20, 21), insbesondere zum Zerkleinern von Maiskörnern, dazu vorgesehen ist, wahlweise zwischen die Messertrommel (8) und den Nachbeschleuniger (9) eingefügt zu werden.

3. Häcksler nach Anspruch 2, dadurch gekennzeichnet, daß die Messertrommel (8), der Nachzerkleinerer (20, 21) und der Nachbeschleuniger (9) mit kleinstmöglichem gegenseitigem Abstand angeordnet sind.

4. Häcksler nach Anspruch 3, dadurch gekennzeichnet, daß ein Nachzerkleinerergehäuse (20) vorgesehen ist, welches zusammen mit darin enthaltenen Quetschwalzen (21) gegen den Abschnitt (15) des Auswurfschachts austauschbar ist, der sich zwischen dem Nachbeschleuniger (9) und der Messertrommel (8) befindet.

5. Häcksler nach Anspruch 4, dadurch gekennzeichnet, daß das Nachzerkleinerergehäuse (20) und der Schachtabschnitt (15) jeweils einen Teil (17, 18) des Mantels des Messertrommelgehäuses und des Nachbeschleunigergehäuses einschließen und daß die Austauschteile durch Flansche (19) mit den bleibenden Gehäuseteilen verbindbar sind.

FIG.1

FIG.2

FIG.3